# FASCICULE DE BREVET EUROPEEN

(11) **EP 2 782 815 B1**
(45) Date de publication et mention de la délivrance du brevet: **10.02.2016**
(21) Numéro de dépôt: 12750462.9
(22) Date de dépôt: 02.08.2012
(51) Int. Cl.: B62D 67/00

(54) **DISPOSITIF POUR L'EXTRACTION D'UN PARE-BRISE ET/OU D'UNE PLANCHE DE BORD**
VORRICHTUNG ZUM ENTFERNEN EINER WINDSCHUTZSCHEIBE UND/ODER EINES ARMATURENBRETTS
DEVICE FOR REMOVING A WINDSHIELD AND/OR AN INSTRUMENT PANEL

(30) Priorité: 21.11.2011 FR 1160566
(43) Date de publication de la demande: 01.10.2014
(73) Titulaire: Renault S.A.S., 92100 Boulogne-Billancourt (FR)
(72) Inventeur: ABRAHAM, Fabrice, F-78400 Chatou (FR)
(86) Numéro de dépôt international: PCT/FR2012/051822
(87) Numéro de publication internationale: WO 2013/076389

(56) Documents cités:
- DE-A1- 3 925 430
- DE-A1- 19 733 034
- US-A- 5 479 689
- US-A- 5 953 802

## Description

L'invention concerne un dispositif pour l'extraction d'un pare-brise et/ou d'une planche de bord de véhicule automobile.

On connaît de nombreux exemples de dispositifs pour l'extraction d'un pare-brise ou d'une planche de bord. Le document US 5953802 décrit le préambule de la revendication 1.

Il s'agit généralement de dispositifs de découpe qui permettent de découper une partie centrale du pare-brise, le pare-brise étant généralement collé sur le pourtour d'une baie de pare-brise faisant partie de la caisse du véhicule.

Plus conventionnellement, une autre méthode consiste à attaquer chaque pare-brise sur sa périphérie à l'aide d'un burin (manuel ou mécanique), et à démonter la planche de bord à l'aide d'outils appropriés utilisés lors de la maintenance du véhicule.

Il est enfin connu d'éjecter le pare-brise manuellement, l'opérateur en charge du démontage pouvant par exemple le repousser avec ses pieds lorsque ce pare-brise est chaussé à la baie de pare-brise.

Ces méthodes de démontage sont dans tous les cas fastidieuses ou dangereuses et, en fonction de la manière dont le pare-brise est monté, ne peuvent pas forcément être reproduites d'un véhicule à l'autre. Ces méthodes sont chronophages et demande plusieurs opérateurs.

L'invention remédie à cet inconvénient en proposant un outil permettant une extraction rapide du pare-brise ou de la planche de bord..

Dans ce but, l'invention propose un dispositif pour l'extraction d'un pare-brise et/ou d'une planche de bord de véhicule automobile lors de la déconstruction dudit véhicule en vue du recyclage de ses constituants, caractérisé en ce qu'il comprend au moins un moyen de pression gonflable apte à être appliqué d'une part sur une face du pare-brise et/ou un élément de structure du véhicule et d'autre part sur une face de la planche de bord pour séparer du véhicule le pare-brise et/ou la planche de bord..

Le dispositif de l'invention utilise astucieusement un coussin gonflable interposé entre d'une part le pare-brise ou la structure du véhicule et d'autre part la planche de bord du véhicule, de façon à repousser et éloigner soit le pare-brise par rapport à la planche de bord, soit la planche de bord par rapport à la structure du véhicule, soit à réaliser une combinaison de ces deux effets simultanément.

Le coussin gonflable est de ce fait utilisé comme un actionneur. L'énergie libérée lors de son déclenchement / gonflage permet, en prenant appui sur les éléments précités et en exerçant une pression sur ceux-ci, de les repousser / éloigner les uns par rapports aux autres. Ce coussin gonflable peut être un coussin gonflable de sécurité du véhicule ou dans une variante de réalisation un coussin gonflable extérieur utilisé comme outil de démontage spécifique.

Selon d'autres caractéristiques du dispositif :
- le dispositif d'extraction comporte
- un coussin gonflable de sécurité logé dans la planche de bord du véhicule,
- un moyen de pression comportant une cale dont une face est apte à être appliquée contre la face du pare-brise et/ou un élément de structure de caisse du véhicule et dont une face opposée est apte à coopérer avec une trappe de fermeture d'un logement dudit coussin disposée dans la face de la planche de bord,
ladite trappe étant apte à être sollicitée par ledit coussin pour repousser ladite cale.

L'invention utilise astucieusement le coussin gonflable de sécurité prévu à demeure dans la planche de bord du véhicule, et en particulier le coussin gonflable coté passager avant. On note que le déclenchement / gonflage du coussin gonflable doit en tout état de cause être effectué lors du processus de déconstruction afin de prévenir tout risque d'explosion ultérieur lors du recyclage du véhicule. Ainsi l'invention met à profit le coussin gonflable de sécurité du véhicule et cette étape de déclenchement nécessaire en vue de réaliser une fonction supplémentaire de démontage du pare-brise et/ou de la planche de bord du véhicule
- la cale est destinée à permettre l'éjection d'un pare-brise du véhicule et elle comporte une face avant destinée à être appliquée contre une face interne du pare-brise et une face arrière destinée à être sollicitée par la trappe du logement du coussin gonflable de sécurité ;
- l'épaisseur de la cale séparant sa face avant de sa face arrière est supérieure à la distance séparant la face interne du pare-brise de la trappe du logement du coussin gonflable de sécurité lorsqu'elle occupe sa position maximale d'ouverture sous l'effet du gonflage du coussin ;
- la cale est destinée à permettre la rupture des fixations d'une planche de bord et elle comporte au moins une première face destinée à coopérer avec un élément de structure du véhicule et une seconde face opposée destinée à être sollicitée par la trappe du logement du coussin gonflable de sécurité disposée dans la face de la planche de bord ;
- l'épaisseur de la cale séparant sa première face de sa seconde face est supérieure à la distance séparant l'élément de structure de la trappe du logement du coussin gonflable de sécurité lorsqu'elle occupe sa position maximale d'ouverture sous l'effet du gonflage du coussin.

L'invention concerne aussi un procédé d'extraction d'un pare-brise et/ou d'une planche de bord de véhicule automobile lors de la déconstruction dudit véhicule en vue du recyclage de ses constituants, comportant au moins une étape d'éjection au cours de laquelle on applique une pression par le gonflable d'un coussin contre d'une part une face du pare-brise et/ou d'un élément de structure du véhicule et d'autre part contre la planche de bord pour séparer du véhicule le pare-brise et/ou la planche de bord.

Selon d'autres caractéristiques de l'invention, au cours de l'étape d'éjection, on dispose une cale entre d'une part une trappe de fermeture d'un logement d'un coussin gonflable de sécurité logé dans la planche de bord du véhicule et d'autre part le pare-brise et/ou un élément de structure du véhicule, puis on déclenche le gonflable du coussin, notamment le coussin gonflable de sécurité du véhicule.

D'autres caractéristiques et avantages de l'invention apparaitront à la lecture de la description détaillée qui suit pour la compréhension de laquelle on se reportera aux dessins annexés parmi lesquels :
- la figure 1 est une vue en coupe longitudinale d'un dispositif utilisé dans le cadre de l'extraction d'un pare-brise d'un véhicule automobile ;
- la figure 2 est une vue de côté avec arrachement longitudinale d'un dispositif utilisé dans le cadre de l'extraction d'une planche de bord d'un véhicule automobile.

Dans la description qui va suivre, des numéros de référence identiques désignent des pièces identiques ou ayant des fonctions similaires.

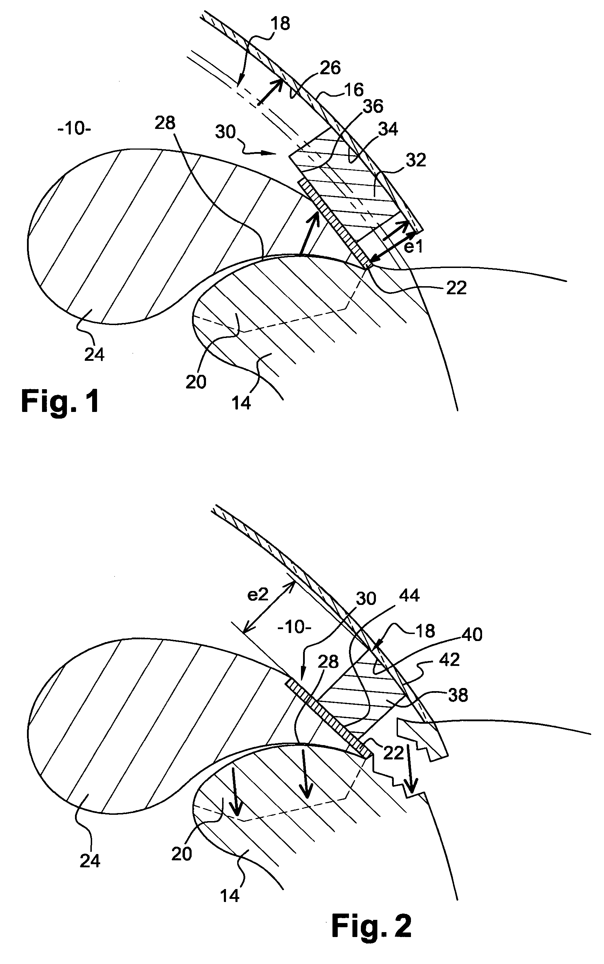

On a représenté aux figures un habitacle 10 de véhicule automobile comportant pour l'essentiel une cellule comportant une planche de bord 14 et un pare-brise 16 reposant sur une baie de pare-brise 18, visible notamment à la figure 2.

Un logement 20 de la planche de bord 14, fermé par une trappe pivotante 22, reçoit un coussin gonflable de sécurité 24 qui est susceptible de se déployer en entraînant avec lui la trappe 22 en direction du pare-brise 16.

De manière connue, lors de la déconstruction dudit véhicule en vue du recyclage de ses constituants, pour extraire le pare-brise ou la planche de bord 14, il est connu d'utiliser au moins un moyen de pression apte à être appliqué contre une face interne 26 du pare-brise 16 et/ou une face 28 de la planche de bord 14 pour le/la séparer du véhicule. Ce moyen de pression est de façon très artisanale habituellement constitué des pieds de l'opérateur en charge du démontage ou d'une autre partie de son corps lors des pare-brises chaussé à la baie.

L'invention utilise cette technique,d'écartement entre deux éléments disjoints tendant à les éloigner l'un de l'autre, en proposant un moyen de pression mû par le coussin gonflable 24 de sécurité du véhicule. La pression est assurée dans des directions opposées, sur chacun les éléments à repousser l'un part rapport à l'autre.

Dans ce but, l'invention propose dans le mode de réalisation illustré un dispositif 30 comportant :
- le coussin 24 gonflable de sécurité logé dans la planche de bord du véhicule ;
- un moyen de pression comportant une cale 32, 38 dont une face 34, 40 est apte à être appliquée contre la face 26 du pare-brise et/ou contre un élément 42 de structure de caisse du véhicule et dont une face opposée 36, 44 est apte à coopérer avec la trappe 22 de fermeture du logement 20 dudit coussin 24 disposée dans la face 28 de la planche de bord.

Ainsi, la trappe 22 peut être sollicitée par le coussin 24 pour repousser la cale 32, 38 et ainsi soit éjecter le pare-brise 16, soit éjecter la planche de bord 14 en prenant appui sur l'élément 42 de structure de caisse.

Comme l'illustre la figure 1 qui concerne le cas selon lequel la cale 32 est destinée à permettre l'éjection d'un pare-brise 16 du véhicule, la cale 32 comporte une face avant 34 destinée à être appliquée contre une face interne 26 du pare-brise 16 et une face arrière 36 destinée à être sollicitée par la trappe 22 du logement 20 du coussin 24 gonflable de sécurité. Comme on peut le voir ici, l'activation du coussin 24 repousse la cale 32 qui éjecte à son tour le pare-brise 16. Les notions « avant-arrière » s'entendent dans le texte relativement à l'orientation générale « avant-arrière » du véhicule. En outre, selon l'inclinaison du pare-brise qui peut être plus ou moins prononcée, on peut substituer les termes « avant » et « arrière » respectivement par « supérieur » et « inférieur ».

Il sera compris qu'il est nécessaire à cet effet qu'une épaisseur "e1" de la cale 32, séparant sa face avant 34 de sa face arrière 36, doit être supérieure à la distance séparant la face interne 26 du pare-brise de la trappe 22 du logement du coussin gonflable de sécurité lorsqu'elle occupe sa position maximale d'ouverture sous l'effet du gonflage du coussin 24.

Comme l'illustre la figure 2, une cale 38 qui peut être d'un d'un type différent est destinée à permettre la rupture des fixations d'une planche 14 de bord. A cet effet, la cale 38 comporte au moins une première face 40 destinée à coopérer par réaction avec un élément de structure de caisse du véhicule, par exemple un montant 42 de la baie de pare-brise 18 (ou tout autre élément de structure fixe du véhicule) et une seconde face opposée 44 destinée à être sollicitée par la trappe 22 du logement 20 du coussin 24 gonflable de sécurité qui est disposée dans la face 28 de la planche de bord. La première face 40 est typiquement une face avant ou supérieure de la cale 38, tandis que la seconde face 44 est typiquement une face arrière ou inférieure de la cale 38.

D'une manière analogue au cas précédent, il sera compris que l'épaisseur "e2" de la cale 38 séparant sa première face 40 de sa seconde face 44 est supérieure à la distance séparant l'élément 42 de structure de caisse de la trappe 22 du logement 20 du coussin gonflable 24 de sécurité lorsqu'elle occupe sa position maximale d'ouverture sous l'effet du gonflage du coussin 24.

Cette deuxième cale 38, prenant appui sur l'élément 42 de structure de caisse est ici apte à provoquer la rupture des fixations de la planche de bord 14 qui descend alors dans l'habitacle.

Dans cette configuration, un procédé d'extraction d'un pare-brise et/ou d'une planche de bord de véhicule automobile lors de la déconstruction dudit véhicule en vue du recyclage de ses constituants, comporte donc de manière connue au moins une étape d'éjection au cours de laquelle on applique une pression contre une face du pare-brise 16 et/ou de la planche de bord 14 pour le/la séparer du véhicule.

Au cours de cette étape, on dispose donc une cale 32, 38 entre une trappe 22 de fermeture d'un logement 24 d'un coussin 22 gonflable de sécurité logé dans la planche de bord 14 du véhicule et la planche de bord 14 et/ou le pare-brise 16, puis on déclenche le coussin 24 gonflable de sécurité.

L'invention permet de simplifier et de sécuriser deux opérations de la déconstruction d'un véhicule automobile.

Dans un autre mode de réalisation non illustré de l'invention, le coussin gonflable peut être un coussin gonflable extérieur au véhicule, utilisé spécifiquement comme outil de désassemblage du pare-brise ou de la planche de bord. Un tel coussin gonflable peut en outre être utilisé sur la planche de bord dans une zone proche du volant. Le volant peut en effet être utilisé comme butée pour retenir le coussin lors de son déploiement, de façon à améliorer son effet de pression sur le pare-brise et/ou un élément de structure du véhicule.

## Revendications

1. Dispositif pour l'extraction d'un pare-brise (16) et/ou d'une planche de bord (14) de véhicule automobile lors de la déconstruction dudit véhicule en vue du recyclage de ses constituants, **caractérisé en ce qu'**il comprend au moins un moyen de pression gonflable apte à être appliqué d'une part sur une face (26) du pare-brise (16) et/ou un élément (42) de structure du véhicule et d'autre part sur une face (28) de la planche de bord (14) pour séparer du véhicule le pare-brise (16) et/ou la planche de bord (14).

2. Dispositif selon la revendication 1, **caractérisé en ce qu'**il comporte
- un coussin (24) gonflable de sécurité logé dans la planche de bord du véhicule,
- un moyen de pression comportant une cale (32, 38) dont une face (34, 40) est apte à être appliquée contre la face du pare-brise (16) et/ou un élément (42) de structure de caisse du véhicule et dont une face opposée (36, 44) est apte à coopérer avec une trappe (22) de fermeture d'un logement dudit coussin (24) disposée dans la face (28) de la planche de bord (14),
ladite trappe (22) étant apte à être sollicitée par ledit coussin (24) pour repousser ladite cale (32, 38).

3. Dispositif selon la revendication 2, **caractérisé en ce que** la cale (32) est destinée à permettre l'éjection d'un pare-brise (16) du véhicule et **en ce qu'**elle comporte une face avant (34) destinée à être appliquée contre une face interne (26) du pare-brise (16) et une face arrière (36) destinée à être sollicitée par la trappe (22) du logement (20) du coussin (24) gonflable de sécurité.

4. Dispositif selon la revendication 3, **caractérisé en ce que** l'épaisseur (e1) de la cale (32) séparant sa face avant (34) de sa face arrière (36) est supérieure à la distance séparant la face interne (26) du pare-brise de la trappe (22) du logement (20) du coussin (24) gonflable de sécurité lorsqu'elle occupe sa position maximale d'ouverture sous l'effet du gonflage du coussin (24).

5. Dispositif selon la revendication 2, **caractérisé en ce que** la cale (38) est destinée à permettre la rupture des fixations d'une planche de bord (14) et **en ce qu'**elle comporte au moins une première face (40) destinée à coopérer avec un élément (42) de structure du véhicule et une seconde face opposée (44) destinée à être sollicitée par la trappe (22) du logement (20) du coussin (24) gonflable de sécurité dans la face (28) de la planche de bord.

6. Dispositif selon la revendication 5, **caractérisé en ce que** l'épaisseur (e2) de la cale (38) séparant sa première face (40) de sa seconde face (44) est supérieure à la distance séparant l'élément (42) de structure de la trappe (22) du logement (20) du coussin (24) gonflable de sécurité lorsqu'elle occupe sa position maximale d'ouverture sous l'effet du gonflage du coussin (24).

7. Procédé d'extraction d'un pare-brise (16) et/ou d'une planche de bord (14) de véhicule automobile lors de la déconstruction dudit véhicule en vue du recyclage de ses constituants, comportant au moins une étape d'éjection au cours de laquelle on applique une pression par le gonflage d'un coussin contre d'une part une face (26) du pare-brise (16) et/ou d'un élément (42) de structure du véhicule et d'autre part contre la planche de bord (14) pour séparer du véhicule le pare-brise et/ou la planche de bord (14).

8. Procédé selon la revendication 7, **caractérisé en ce qu'**au cours de l'étape d'éjection, on dispose une cale (32, 38) entre d'une part une trappe (22) de fermeture d'un logement (20) d'un coussin (24) gonflable de sécurité logé dans la planche de bord (14) du véhicule et d'autre part le pare-brise (16) et/ou un élément (42) de structure du véhicule, puis on déclenche le coussin (24) gonflable, notamment le coussin gonflable de sécurité du véhicule.

## Patentansprüche

1. Vorrichtung zum Entfernen einer Windschutzscheibe (16) und/oder eines Armaturenbretts (14) eines Kraftfahrzeugs beim Rückbau des Fahrzeugs zum Zweck des Recycelns seiner Bestandteile, **dadurch gekennzeichnet, dass** sie mindestens eine aufblasbare Druckeinrichtung enthält, die einerseits auf eine Seite (26) der Windschutzscheibe (16) und/oder ein Strukturelement (42) des Fahrzeugs und andererseits auf eine Seite (28) des Armaturenbretts (14) aufgelegt werden kann, um die Windschutzscheibe (16) und/oder das Armaturenbrett (14) vom Fahrzeug zu entfernen.

2. Vorrichtung nach Anspruch 1, **dadurch gekennzeichnet, dass** sie aufweist
- einen Airbag (24), der im Armaturenbrett des Fahrzeugs untergebracht ist,
- eine Druckeinrichtung, die einen Keil (32, 38) aufweist, von dem eine Seite (34, 40) gegen die Seite der Windschutzscheibe (16) und/oder ein Karosserie-Strukturelement (42) des Fahrzeugs aufgelegt werden kann, und von dem eine gegenüberliegende Seite (36, 44) mit einer Abdeckklappe (22) einer Aufnahme des Airbags (24) zusammenwirken kann, die in der Seite (28) des Armaturenbretts (14) angeordnet ist,
wobei die Klappe (22) vom Airbag (24) beaufschlagt werden kann, um den Keil (32, 38) zurückzudrücken.

3. Vorrichtung nach Anspruch 2, **dadurch gekennzeichnet, dass** der Keil (32) dazu bestimmt ist, den Auswurf einer Windschutzscheibe (16) aus dem Fahrzeug zu erlauben, und dass er eine Vorderseite (34), die dazu bestimmt ist, gegen eine Innenseite (26) der Windschutzscheibe (16) angelegt zu werden, und eine Rückseite (36) aufweist, die dazu bestimmt ist, von der Klappe (22) der Aufnahme (20) des Airbags (24) beaufschlagt zu werden.

4. Vorrichtung nach Anspruch 3, **dadurch gekennzeichnet, dass** die Dicke (e1) des Keils (32), die seine Vorderseite (34) von seiner Rückseite (36) trennt, größer ist als der Abstand, der die Innenseite (26) der Windschutzscheibe von der Klappe (22) der Aufnahme (20) des Airbags (24) trennt, wenn sie unter der Wirkung des Aufblasens des Airbags (24) ihre maximale Öffnungsstellung einnimmt.

5. Vorrichtung nach Anspruch 2, **dadurch gekennzeichnet, dass** der Keil (38) dazu bestimmt ist, den Bruch der Befestigungen eines Armaturenbretts (14) zu erlauben, und dass er mindestens eine erste Seite (40), die dazu bestimmt ist, mit einem Strukturelement (42) des Fahrzeugs zusammenzuwirken, und eine zweite gegenüberliegende Seite (44) aufweist, die dazu bestimmt ist, von der Klappe (22) der Aufnahme (20) des Airbags (24) in der Seite (28) des Armaturenbretts beaufschlagt zu werden.

6. Vorrichtung nach Anspruch 5, **dadurch gekennzeichnet, dass** die Dicke (e2) des Keils (38), die seine erste Seite (40) von seiner zweiten Seite (44) trennt, größer ist als der Abstand, der das Strukturelement (42) von der Klappe (22) der Aufnahme (20) des Airbags (24) trennt, wenn sie unter der Wirkung des Aufblasens des Airbags (24) ihre maximale Öffnungsstellung einnimmt.

7. Verfahren zum Entfernen einer Windschutzscheibe (16) und/oder eines Armaturenbretts (14) eines Kraftfahrzeugs beim Rückbau des Fahrzeugs zum Zweck des Recycelns seiner Bestandteile, das mindestens einen Auswurfschritt, während dessen durch das Aufblasen eines Airbags ein Druck gegen einerseits eine Seite (26) der Windschutzscheibe (16) und/oder eines Strukturelements (42) des Fahrzeugs und andererseits gegen das Armaturenbrett (14) angewendet wird, um die Windschutzscheibe und/oder das Armaturenbrett (14) vom Fahrzeug zu trennen.

8. Verfahren nach Anspruch 7, **dadurch gekennzeichnet, dass** während des Auswurfschritts ein Keil (32, 38) zwischen einerseits einer Abdeckklappe (22) einer Aufnahme (20) eines Airbags (24), der im Armaturenbrett (14) des Fahrzeugs untergebracht ist, und andererseits der Windschutzscheibe (16) und/oder einem Strukturelement (42) des Fahrzeugs angeordnet wird, dann der Airbag, insbesondere der Airbag (24) des Fahrzeugs, ausgelöst wird.

## Claims

1. Device for removing a windscreen (16) and/or a dashboard (14) of a motor vehicle when taking apart the said vehicle with the aim of recycling its constituent parts, **characterized in that** it comprises at least one inflatable pressing means able to be applied, on the one hand, to a surface (26) of the windscreen (16) and/or to a structural element (42) of the vehicle and, on the other hand, to a surface (28) of the dashboard (14) in order to separate the windscreen (16) and/or the dashboard (14) from the vehicle.

2. Device according to Claim 1, **characterized in that** it comprises
- an inflatable airbag (24) housed in the dashboard of the vehicle,
- a pressing means comprising a block (32, 38) of which one surface (34, 40) is able to be applied against the surface of the windscreen (16) and/or a structural body element (42) of the vehicle and of which an opposite surface (36, 44) is able to cooperate with a flap (22) for closing a housing of the said airbag (24), which flap is arranged in the surface (28) of the dashboard (14),
the said flap (22) being able to be acted on by the said airbag (24) in order to push back the said block (32, 38).

3. Device according to Claim 2, **characterized in that** the block (32) is intended to allow a windscreen (16) to be ejected from the vehicle, and **in that** it comprises a front surface (34) intended to be applied against an internal surface (26) of the windscreen (16) and a rear surface (36) intended to be acted on by the flap (22) of the housing (20) of the inflatable airbag (24).

4. Device according to Claim 3, **characterized in that** the thickness (e1) of the block (32) separating its front surface (34) from its rear surface (36) is greater than the distance separating the internal surface (26) of the windscreen from the flap (22) of the housing (20) of the inflatable airbag (24) when the said flap occupies its maximum opening position under the effect of the inflation of the airbag (24).

5. Device according to Claim 2, **characterized in that** the block (38) is intended to allow the fixings of a dashboard (14) to be broken, and **in that** it comprises at least a first surface (40) intended to cooperate with a structural element (42) of the vehicle and a second opposite surface (44) intended to be acted on by the flap (22) of the housing (20) of the inflatable airbag (24) in the surface (28) of the dashboard.

6. Device according to Claim 5, **characterized in that** the thickness (e2) of the block (38) separating its first surface (40) from its second surface (44) is greater than the distance separating the structural element (42) from the flap (22) of the housing (20) of the inflatable airbag (24) when the said flap occupies its maximum opening position under the effect of the inflation of the airbag (24).

7. Method for removing a windscreen (16) and/or a dashboard (14) of a motor vehicle when taking apart the said vehicle with the aim of recycling its constituent parts, comprising at least one ejection step during which a pressure is applied by the inflation of an airbag against, on the one hand, a surface (26) of the windscreen (16) and/or of a structural element (42) of the vehicle and, on the other hand, against the dashboard (14) in order to separate the windscreen and/or the dashboard (14) from the vehicle.

8. Method according to Claim 7, **characterized in that**, during the ejection step, a block (32, 38) is arranged between, on the one hand, a flap (22) for closing a housing (20) of an inflatable airbag (24) housed in the dashboard (14) of the vehicle and, on the other hand, the windscreen (16) and/or a structural element (42) of the vehicle, and then the inflatable airbag (24), in particular the inflatable airbag of the vehicle, is triggered.
